Europäisches Patentamt

European Patent Office

Office européen des brevets

(11) Veröffentlichungsnummer: **0 437 647 A1**

## (12) EUROPÄISCHE PATENTANMELDUNG

(21) Anmeldenummer: 90100731.0

(22) Anmeldetag: 15.01.90

(51) Int. Cl.5: **G01N 21/59, G01M 11/02**

(43) Veröffentlichungstag der Anmeldung:
24.07.91 Patentblatt 91/30

(84) Benannte Vertragsstaaten:
AT BE CH DE FR GB LI NL SE

(71) Anmelder: LENINGRADSKOE OTDELENIE
TSENTRALNOGO
NAUCHNO-ISSLEDO-VATELSKOGO
INSTITUTA SVYAZI (LONIIS)
ulitsa Varshavskaya, 11
Leningrad(SU)

(72) Erfinder: Koromyslichenko, Vladislav
Nikolaevich
Ulitsa Dekabristov, 58, kv. 23
Leningrad(SU)
Erfinder: Bukhshtab, Mikhail Alexandrovich

Ulitsa Novoselov, 41, kv. 21
Leningrad(SU)
Erfinder: Kirillov, Andrei Jurievich
Ulitsa Shelgunova, 19, kv. 9
Leningrad(SU)
Erfinder: Portnov, Anatoly Mikhailovich
Ulitsa Rubinshteina 15/17, kv. 303
Leningrad(SU)
Erfinder: Ovsyannikov, Andrei Alexandrovich
Ulitsa Chudnovskogo 8, kv. 70
Leningrad(SU)

(74) Vertreter: Patentanwälte Beetz sen. - Beetz
jun. Timpe - Siegfried - Schmitt-Fumian-
Mayr
Steinsdorfstrasse 10
W-8000 München 22(DE)

(54) Verfahren zur Messung von extrem kleinen optischen Verlusten.

(57) Das Verfahren bezieht sich auf die Fotometrie, die Faseroptik sowie auf die Messungen von extrem kleinen optischen Verlusten auf anderen Gebieten der optischen Technik. Das Ziel der Erfindung besteht in der Erhöhung der Meßgenauigkeit der Messung von Verlusten. Diese werden durch die Modulation der sondierenden optischen Strahlung mit einer Frequenz

$$f_0 \geq 0,1 \, \Delta F_c \, \delta^{-\frac{3}{2}},$$

durch die Bildung eines Meß- und eines optischen Kanals, durch die Umwandlung der optischen Strahlung in elektrische Signale, durch eine gleichzeitige synchrone Gleichrichtung dieser Signale mit der Zeitabweichung

$$\Delta t \leq \frac{\pi}{2,44} \cdot \frac{\tau_H}{\delta_{3H}} \cdot \sqrt{\delta}$$

sowie durch deren Integrieren während der Zeit $\tau_n$, die aus der Bedingung

$$\frac{(\delta)^{-1}}{4\pi f_0} \leq \tau_h \leq \frac{2,44}{\pi} \cdot \frac{(\delta)^{1/2}}{\Delta F_c}$$

EP 0 437 647 A1

ermittelt wird, worin $\delta_{3n}$ der relative Wert der Instabilität der Energie der sondierenden Strahlung; $\delta$ der relative Grenzmeßfehler, $\Delta F_c$ das Frequenzband des elektrischen Signals ist.

# VERFAHREN ZUR MESSUNG VON EXTREM KLEINEN OPTISCHEN VERLUSTEN

Das Meßverfahren bezieht sich auf die Fotometrie, die spektrale Fotometrie, die Faseroptik und kann bei der Messung von optischen Verlusten, die mit Streuung und Absorption verbunden sind, sowie zur Messung von optischen Gesamtverlusten bei Laseroptikelementen, von Halbzeugen optischer Fasern und Lichtleiterfasern angewendet werden.

Es ist ein Verfahren zur Messung der optischen Kenngrößen von Objekten bekannt, welches in einer Vormodulation nach dem periodischen Gesetz der das Object bzw. optische Gerät sondierenden Strahlung, der Umwandlung der durch das Objekt transmittierten modulierten sondierenden Strahlung in ein elektrisches Signal, in der selektiven Verstärkung des elektrischen Signals, seiner synchronen Gleichrichtung, einer Niederfrequenzfiltration (dem Integrieren) des elektrischen Signals, in der Messung des Wertes des integrierten Signals sowie in der Ermittlung der Kenngrößen des Objekts aus diesem Signal besteht (s. Zeitschrift "Geräte und Technik für Versuche", 1986, S. 186).

Dieses Verfahren ist jedoch zur Messung von extrem kleinen optischen Verlusten nicht anwendbar.

Es ist ferner ein Verfahren zu einer aufeinanderfolgenden synchronen Messung von extrem kleinen optischen Verlusten bekannt, welches sich auf einer Vormodulation nach dem periodischen Gesetz der ein optisches Objekt sondierenden Strahlung, dem Bilden eines Bezugs- und Meßkanals in der modulierten sondierenden Strahlung, auf der Anbringung eines optischen Objekts in einen Meßkanal, der Umwandlung der Energie der sondierenden Strahlung in elektrische Signale in den Bezugs- und Meßkanälen, deren synchronen Verstärkung, die in einer selektiven Verstärkung eines modulierten Signals, dessen synchroner Gleichrichtung und Integrieren besteht, auf einer aufeinanderfolgenden Messung der Werte der integrierten Signale sowie auf der Berechnung der optischen Kennwerte der Objekte aus den konsequent gemessenen Werten der Signale der Meß- und Bezugskanäle beruht (s. Grigorjahz W.W., Aozjuk W.S., Olejnikow A.Ja., Tichomirow N.A., Tschamorowskij N.A. Genaue Messung von Spektren der Gesamtverluste in Lichtleiterfasern. - Radiotechnika i elektronika, 1979, Band 24, v.2, S. 209-212, Bild 1).

Der Nachteil dieses bekannten Verfahrens besteht im Vorhandensein eines wesentlichen Fehlers bei den Messungen, der durch folgende zusammenhängende Gründe bedingt ist:
- Fehlen einer eineindeutigen Zuordnung zwischen den Parametern der Kanäle mit einer synchronen Verstärkung;
- Instabilität der Integrationszeit der Signale in Filtern der unteren Frequenzkanäle und deren Unterschied zueinander;
- eine in der Zeit konsequente Durchführung der Messungen der Signale in den Bezugs- und Meßkanälen.

Zur Erreichung eines minimalen relativen Meßfehlers $\delta_0 \sim 10^{-6}$ bei einer Modulationsfrequenz von 180 Hz gemäß dem bekannten Verfahren muß die Integrationszeit $\tau_n$ im Filter der unteren Frequenzen einen Wert haben, der mindestens

$$\tau_n \geq \frac{I}{2\,(\,4\pi f_0\,\delta_0\,)} \cong 221 \text{ sek,}$$

betragen soll, was praktisch nicht realisiert werden kann und auf das Fehlen eines Zusammenhangs zwischen den Parametern der synchronen Verstärkung und einem maximal erreichbaren relativen Meßfehler hinweist. Bei einem realen Wert $\tau_n = 1$ sek. beträgt der erreichbare Wert $\delta_0$ eine Größe von $2,21 \times 10^{-4}$ - (bei $f_0 = 180$ Hz).

Die Instabilität und das Ungleichgewicht der Integrationszeit führt zu einem Fehler

$$\delta_T \cong \frac{2\Delta T}{\tau}$$

was auf die Notwendigkeit der Zeitstabilisierung $\tau_n$ in den beiden Kanälen hinweist. Bei einer korrekten Durchführung des Messung der Signale der Kanäle ist das Entstehen von Fehlern, die durch eine aufeinanderfolgende Kommutation der Signale in den Kanälen, den Endwert des Frequenzbandes des zu messenden Signals $\Delta F_c$ sowie durch die Instabilität der Energie der sondierenden Strahlung $S_{3n}$ im Zeitintervall zwischen zwei aufeinanderfolgenden Messungen bedingt sind, unvermeidlich.

Somit kann man sagen, daß die Analyse der Gründe, die zu der Verminderung der Genauigkeit der Messungen führen, zeigt, daß die Erreichung einer hohen Empfindlichkeit ($^-10^{-6}$) zu kleinen Änderungen von optischen Verlusten der Objekte bei der Durchführung des obenbeschriebenen Meßverfahrens unmöglich ist.

Aufgabe der vorliegenden Erfindung ist es die Empfindlichkeit des Meßverfahrens gegenüber den Änderungen der Kennwerte der zu untersuchenden Objekte zu steigern, was zur Erhöhung der Meßgenauigkeit der extrem kleinen optischen Verluste beiträgt.

Diese Aufgabe wird anspruchsgemäß gelöst.

In den Unteransprüchen sind Merkmale bevorzugter Ausführungsformen der Erfindung gekennzeichnet.

Bei dem bekannten Verfahren, welches eine Vormodulation nach dem periodischen Gesetz mit der Frequenz $f_0$ der das zu untersuchende Objekt sondierenden Strahlung, eine Formierung in der modulierten sondierenden Strahlung eines Bezugs-und Meßkanals, in dem das zu untersuchende Objekt angeordnet ist, eine Umwandlung der Energie der sondierenden Strahlung im Bezugs- und Meßkanal in elektrische Signale, deren Verstärkung, eine synchrone Gleichrichtung, ein Integrieren während der Zeit $\tau_n$, eine Messung der Werte von integrierten Signalen, nach welchen über extrem kleine optische Verluste aus dem Verhältnis der Werte der Signale des Meß- und Bezugskanals urteilt, umfaßt, werden erfindungsgemäß die Werte der integrierten Signale gleichzeitig mit der zulässigen Zeitabweichung $\Delta t$ gemessen, die sich aus der Bedingung

$$\Delta t = \frac{\pi}{2,44} \cdot \frac{\tau_n}{\delta_{3n}} (\delta)^{1/2}$$

ergeben,

worin $\delta_{3n}$ relativer Wert der Instabilität der Energie der sondierenden Strahlung, $\delta$ relativer Grenzmeßfehler ist, ermittelt; die Frequenz der Vormodulation wird aus der Bedingung

$$f_0 \geqslant 0,1 \, \Delta F_c \cdot \delta^{-3/2}$$

bestimmt, worin $\Delta F_c$ Frequenzband des elektrishen Signals ist, während das Integrieren der Signale in den Kanälen gleichzeitig während der für den Meß- und Bezugskanal gleichen Zeit, die aus der Ungleichung

$$\frac{(\delta)^{-1}}{4\pi f_0} \leq \tilde{\tau}_n \leq \frac{2.44}{\pi} \cdot \frac{(\delta)^{1/2}}{\Delta F_c}$$

gewählt wird, durchgeführt wird.

Die wesentlichen Merkmale der anmeldungsgemäßen technischen Lösung gewährleisten die Erreichung einer höheren Meßgenauigkeit.

Das Verfahren schließt folgende Reihenfolge von zusammenhängenden Schritten ein, u. zw.:

1. Man wählt, indem man aus der Bedingung

$$f_0 > 0,1 \, \Delta F_c (\delta)^{-3/2}$$

ausgeht, die Frequenz der Vormodulation $f_0$ ($\Delta F_c$ bedeutet dabei das Frequenzband des elektrischen Signals, $\delta$ den relativen Grenzmeßfehler).

2. Man moduliert mit der Frequenz $f_0$ die Energie der sondierenden Strahlung.

3. Man formiert einen Bezugs- und Meßkanal. Man bringt das Meßobjekt in den Meßkanal an.

4. Mittels fotoelektrischen Umformern wandelt man die Energie der sondierenden Strahlung in elektrische Signale des Bezugs- und des Meßkanals um.

5. Man führt eine selektive Verstärkung, eine synchrone Gleichrichtung und zugleich (während eines streng fixierten Zeitabschnittes $\tau_n$) ein Integrieren der Signale in den Kanälen gemäß dem Ausdruck

$$\frac{(\delta)^{-1}}{4\pi f_0} \leq \tilde{\iota}_\kappa \leq \frac{2{,}44}{\pi} \cdot \frac{(\delta)^{1/2}}{\Delta f_c}$$

durch.

6. Man führt eine gleichzeitige, mit der Zeitabweichung

$$\Delta t \leq \frac{\pi}{2{,}44} \cdot \frac{\tilde{\iota}_\kappa}{\delta_{3\kappa}} (\delta)^{1/2}$$

zulässige Messung der Signale in den Kanälen beim Fehlen und Vorhandensein des zu messenden Objekts ($\delta_{3n}$ relativer Wert der Instabilität der Energie der sondierenden Strahlung) durch.

7. Man errechnet nach dem synchronen Verhältnis der Signalwerte die Kennwerte des zu messenden Objekts.

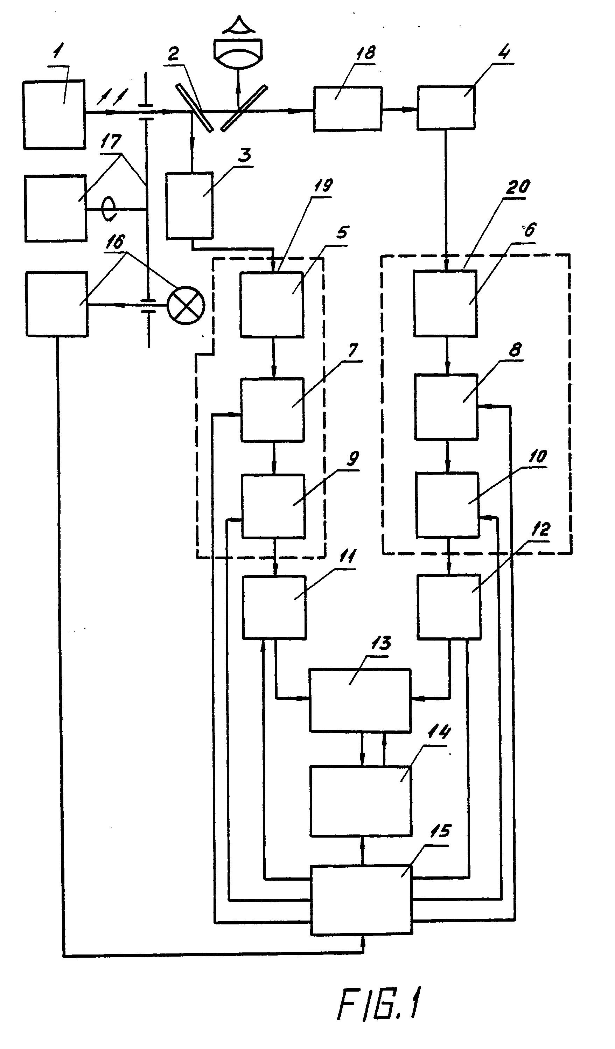

Die Erfindung wird anhand der Zeichnung näher erläutert.

Die einzige Figur zeigt eine schematische Darstellung der Vorrichtung zur Durchführung des erfindungsgemäßen Verfahrens.

Diese Vorrichtung enthält einen Laser 1, einen Teil 2 zur Bildung der Meß- und Bezugskanäle, fotoelektrische Umformer des Bezugskanals 3 und des Meßkanals 4, Selektivverstärker der Kanäle 5 und 6, synchrone Detektoren 7 und 8, steuerbare Integratoren 9 und 10, digitale Meßeinrichtungen des Bezugskanals 11 und des Meßkanals 12, ein Interface 13, einen Mikroprozessor 14, einen Synchronisiergenerator 15, einen Synchronisierfrequenzgeber 16, einen Unterbrecher (einen mechanischen Modulator) 17, ein zu messendes Objekt 18, Synchronverstärker des Bezugs- und Meßkanals 19, 20.

Das Verfahren wird folgenderweise durchgeführt.

Der Lichtstrom der sondierenden Strahlung des Lasers 1 wird mit einem mechanischen Unterbrecher 17, der eine Chopperscheibe darstellt, die auf die Welle eines elektrischen Hochgeschwindigkeitsmotors aufgesetzt ist, moduliert und mittels eines Lichtabscheiders in einen Bezugs-und einen Meßkanal geteilt. Die sondierende Strahlung wird im Bezugskanal durch einen elektrischen Umformer des Bezugskanals 3 in ein elektrisches Signal umgewandelt, das im Selektivverstärker 5 konsequent selektiv verstärkt und im Synchrondetektor 7 demoduliert wird. Weiter wird das elektrische Signal im steuerbaren Integrator 9 integriert. Im Meßkanal wird die sondierende Strahlung, nachdem sie das zu messende Objekt passiert hat, umgewandelt, verstärkt, synchron demoduliert und integriert in der Weise, wie dies im Bezugskanal erfolgt. Synchrone Messungen der Signale werden mittels digitalen Meßeinrichtungen des Bezugskanals 11 und des Meßkanals 12, deren Arbeit der Mikroprozessor 14 über das Interface 13 steuert, durchgeführt. Mittels eines Gebers der Überfrequenz 16 bekommt man das vorgegebene Signal der Bezugsfrequenz $f_0$, das an den Eingang des Synchronisiergenerators 15 angelegt ist. Vom Ausgang des Synchronisiergenerators 15 kommen die Steuersignale zu den synchronen Detektoren 7 und 8, zu steuerbaren Integratoren 9 und 10, zur digitalen Meßeinrichtung des Bezugskanals 11, zur digitalen Meßeinrichtung des Meßkanals 12, und somit wird die Synchronisierung der Arbeit der ganzen Vorrichtung durchgeführt.

Die Bedeutung des Signals im Bezugskanal wird durch den Ausdruck

$$N_{on}/\Delta t = t = S_{c\delta}^{on} \phi_0 K_{\phi_A}^{on} \cdot K_{on}^{cuH} /_{t = \Delta t}$$

worin $S_c$ Übertragungskoeffizient des Lichtstromes in den Bezugskanal ist; $\phi_0$ Lichtstrom der sondierenden

Strahlung bedeutet; $K^{C\ UH}_{\phi\ A}$ Koeffizient der elektrischen Lichtumwandlung des Bezugskanals ist; $K^{C\ UH}_{o\ n}$ Koeffizient der Übertragung des Synchronverstärkers des Bezugskanals ist. Das Signal im Meßkanal wird durch den Ausdruck

$$N_{u s}\big/_{t=\Delta t} = S_{c\beta} \cdot \phi_o K^{u3}_{\phi A} \cdot K^{c u H}_{u3} \cdot S_x \big/_{t=\Delta t}$$

ermittelt, worin $S_{cb}$, $K^{h\ 3}_{\phi\ A}$, $K^{C\ UH}_{u\ 3}$ jeweils Koeffizienten des Meßkanals bedeuten, $\varsigma_x$ die zu messende Charakteristik des Objekts ist. Die optische Charakteristik $\varsigma_x$ wird folgenderweise durchgeführt. Zuerst wird eine Serie von n-Messungen ohne zu untersuchendes Objekt durchgeführt; man errechnet dabei die Bedeutung des Verhältnisses $N_{u3}/N_{on}$;danach werden die Messungen bei der Einführung des zu messenden Objekts 18 wiederholt; man errechnet wieder einen durchschnittlichen Wert $N'_{u3}/N'_{on}$ und nachher das Verhältnis

$$\frac{N'_{u3}/N'_{on}}{N_{u3}/N_{on}}\big/_{t=\Delta t} = S_x \big/_{t=\Delta t}$$

Die Berechnungen werden nach dem in einem Mikroprozessor eingeführten Programm durchgeführt.

Die vorliegende Erfindung kann beim Bau und bei der Montage von Hauptverbindungslinien, bei deren Renovierung und vorbeugender Wartung sowie im technologischen Prozeß der Herstellung von Erzeugnissen der Faseroptik angewendet werden.

**Patentansprüche**

1. Verfahren zur Messung von extrem kleinen optischen Verlusten, vorzugsweise mit einer synchronen Gleichrichtung, welches die Schritte einer periodischen Vormodulation mit der Frequenz $f_0$ der das zu untersuchende Objekt sondierenden Strahlung, die Bildung eines Bezugs- und Meßkanals, in dem das zu untersuchende Objekt angeordnet ist, in dem Strahlengang der modulierten sondierenden Strahlung, die Umwandlung der Energie der sondierenden Strahlung im Bezugs- und Meßkanal in elektrische Signale, die Verstärkung dieser Signale, deren synchrone Gleichrichtung, Integrieren während der Zeit $\tau_n$, die Messung der Werte von integrierten Signalen sowie die Ermittlung der optischen Verluste aus dem Verhältnis der Werte der Signale des Meß- und Bezugskanals einschließt,
   dadurch **gekennzeichnet,**
   daß die Messung der Werte der integrierten Signale gleichzeitig mit der zulässigen Zeitabweichung $\Delta t$ durchgeführt wird, die aus der Bedingung

$$\Delta t \leq \frac{\pi}{2,44} \cdot \frac{\tau_u}{\delta_{3H}} \cdot (\delta)^{1/2}$$

   worin $\delta_{3n}$ der relative Wert der Instabilität der Energie der sondierenden Strahlung, $\delta$ der relative Grenzmeßfehler ist, ermittelt wird, wobei die Frequenz $f_0$ der Vormodulation aus der Bedingung $f_0 \geqslant 0{,}1 \Delta F_c \, \delta_{z}^{3}$ gewählt wird, worin $\Delta F_c$ das Frequenzband des elektrischen Signals ist, während das Integrieren der Signale in den Kanälen gleichzeitig während der für den Meß- und den Bezugskanal gleichen Zeit $\tau_n$, die aus der Ungleichung

$$\frac{(\delta)^{-1}}{4\pi f_0} \leq \tau_H \leq \frac{2,44}{\pi} \frac{(\delta)^{1/2}}{\Delta F_c}$$

6

bestimmt wird, durchgeführt wird.

FIG.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | INSTRUMENTS AND EXPERIMENTAL TECHNIQUES, Band 31, Nr. 2, Teil 2, März-April 1988, Seiten 443-446, Plenum Publishing Corp., New York, US; M.A. BUKHSHTAB et al.: "Two-channel system for determination of small optical losses of laser radiation with an amplitude resolution of >104" <br> * Figur 1; Seite 444, Absatz 3 * <br> --- | 1 | G 01 N 21/59 <br> G 01 M 11/02 |
| A | GB-A-2 192 985 (THE SECRETARY OF STATE FOR DEFENCE) <br> * Figur 2; Seite 3, Zeile 50 - Seite 4, Zeile 8 * <br> ----- | 1 | |
| | | | **RECHERCHIERTE SACHGEBIETE (Int. Cl.5)** <br><br> G 01 J <br> G 01 M <br> G 01 N |

Der vorliegende Recherchenbericht wurde für alle Patentansprüche erstellt

| Recherchenort | Abschlußdatum der Recherche | Prüfer |
|---|---|---|
| DEN HAAG | 11-09-1990 | ZINNGREBE U. |